# EUROPEAN PATENT SPECIFICATION

(11) **EP 1 993 370 B1**
(45) Date of publication and mention of the grant of the patent: **15.05.2013**
(21) Application number: 07758609.7
(22) Date of filing: 15.03.2007
(51) Int. Cl.: A23G 3/34, A23G 3/36, A23G 3/00, A23G 3/54, A23G 4/06, A23G 4/20

(54) **IMPROVED CONFECTIONERY COMPOSITIONS USING NANOMATERIALS**
VERBESSERTE SÜSSWARENZUSAMMENSETZUNGEN UNTER VERWENDUNG VON NANOMATERIALIEN
COMPOSITIONS DE CONFISERIE AMÉLIORÉES UTILISANT DES NANOMATÉRIAUX

(30) Priority: 15.03.2006 US 782630 P; 14.03.2007 US 686193
(43) Date of publication of application: 26.11.2008
(73) Proprietor: Wm. Wrigley Jr. Company, Chicago, IL 60642 (US)
(72) Inventor: CASTRO, Armando, J., Westchester, Illinois 60154 (US); MIRZOEVA, Elena, S., Cary, Illinois 60013 (US)
(74) Representative: Hayes, Adrian Chetwynd
(86) International application number: PCT/US2007/064072
(87) International publication number: WO 2007/106889

(56) References cited:
- EP-A2- 0 375 122
- DE-A1- 10 249 831
- GB-A- 2 065 691
- US-A- 4 689 235
- US-A- 5 741 505

## Description

### BACKGROUND

The present invention generally relates to confectionery compositions. More specifically, the present invention relates to confectionery compositions having improved compounds and ingredients and methods regarding same.

It has been known in the art of food preparation to coat food compositions in order to provide taste, texture or stability to the final product. For example, coating systems have been employed for various reasons such as for protection of an active ingredient, both while on the shelf and during use, and for prolonged release in the oral cavity and/or systemically. Further, coatings have been used to surround confectionery compositions to provide unique sensorial properties such as crunchy textures, rough surfaces, trigeminal effects and to aid in the release of various ingredients such as sweeteners, flavors, acidulants and the like during mastication.
US-A-4,689,235 describes an extrudable encapsulation matrix composition which comprises a maltodextrin and hydrogen octenylbutanedioate amylodextrin or equivalent. An anticaking agent, such as pyrogenic silica, calcium sulfate or montmorillonite clay may also be added.

Unfortunately, many coating compositions applied to foodstuffs and food ingredients are often susceptible to environmental factors or they lack the chemical structure or intrinsic strength necessary to meet the desired sensorial properties of consumer.

### SUMMARY

The present invention relates to the art of providing improved sensorial properties in edible compositions such as, for example, improving the crunch, hardness and stability of a coating surrounding a foodstuff thereby improving the overall quality of the product.

In an embodiment, the present invention provides a confectionery composition comprising confectionery center and a coating surrounding the confectionery center, characterised in that the coating has a nanomaterial selected from the group consisting of a nanoclay, a mixture of nanoclay materials, a nanocomposite material and combinations thereof.

In a preferred embodiment, the confectionery center is selected from the group consisting of chewing gums, hard candies, chewy candies, nougats, chocolates, toffees, dragees, caramels, suspensions, lozenges, compressed tablets, capsules, nuts, snack foods, baked goods and combinations thereof.

In a preferred embodiment, the nanoclay is selected from the group consisting of montmorillonite, magnesiosilicate, hydrocalcite and combinations thereof.

In a preferred embodiment, the coating further comprises an ingredient selected from the group consisting sucrose, dextrose, maltose, palatinose, xylitol, lactitol. sorbitol, maltitol, mannitol, erythritol, hydrogenated isomaltulose, alditols, gum arabic, maltodextrin, corn syrup, gelatin, chocolate, cellulose material, carboxymethyl cellulose, hydroxymethyl cellulose, starch, modified starch, vegetable gum, alginate, locust bean gum, guar gum, gum tragacanth, shellac, zein, insoluble carbonates, calcium carbonate, magnesium carbonate, talc, antitack agents, flavors, cooling agents, acidulants and combinations thereof.

In a preferred embodiment, the level of the nanomaterial comprises from 1 % to 15.0% by weight of the coating.

In a preferred embodiment, the nanocomposite material comprises spray-dried gum arabic and montmorillonite.

In a preferred embodiment, the nanocomposite material is formed by a process selected from the group consisting of encapsulation, agglomeration, fixation, absorption, extrusion, spinning extrusion, concentric extrusion, entrapment into an extruded compound and combinations thereof.

In a preferred embodiment, the encapsulation is achieved by a process selected from the group consisting of spray drying, fluid-bed coating, spray chilling, spray cooling, molecular inclusion, microencapsulation, coacervation and combinations thereof.

In an alternative embodiment, the present invention provides a method for manufacturing a coated confectionery composition. The method comprises providing a coating material; providing a confectionery composition; and applying at least one layer of the coating material to the confectionery composition characterised in that the coating material comprises a nanomaterial selected from the group consisting of a nanoclay, a mixture of nanoclay materials, a nanocomposite material, combinations thereof.

In a preferred embodiment, the coating material is applied by a process selected from the group consisting of pan coating, spraying, film coating and combinations thereof.

In a preferred embodiment, the coating material comprises montmorillonite and a maltitol solution and wherein the coating material is applied by pan coating onto the confectionery composition.

In a preferred embodiment, the coating material comprises montmorillonite and a chocolate syrup and wherein the coating material is applied by film coating onto the confectionery composition.

In a preferred embodiment, the coating material comprises a sugar solution and the nanocomposite material, wherein the nanocomposite material comprises a spray-dried gum arabic and montmorillonite and wherein the coating material is applied by pan coating onto the confectionery composition.

An advantage of the present invention is to provide coatings, encapsulants and shells that allow for improved sensory properties for confectionery products.

Another advantage of the present invention is to provide coatings, encapsulants and shells that allow for improved shelf stability and overall quality of confectionery products.

Yet another advantage of the present invention is to provide improved confectionery products.

Still another advantage of the present invention is to provide improved methods for making confectionery products.

Additional features and advantages are described herein, and will be apparent from, the following Detailed Description.

### DETAILED DESCRIPTION

The present invention generally relates to confectionery compositions. More specifically, the present invention relates to confectionery compositions having nanomaterials and methods regarding same.

Nanocomposite technology comprises the materials and processes required to disperse nanoscale particles in plastics, metals, or ceramics. Nancomposites can be formed by nanoclay materials which generally contain layered inorganic compounds. Common clays are naturally occurring minerals and thus are subject to natural variability in their constitution. Many clays are aluminosilicates, which have a sheet-like (layered) structure and comprise silica SiO₄ tetrahedra bonded to alumina AlO₆ octahedra in a variety of ways. A 2:1 ratio of tetrahedral to the octahedral results in smectite clays, the most common of which is montmorillonite. Other metals such as magnesium may replace the aluminum in the crystal structure. Depending on the clay, the sheets bear a charge on the surface and edges, this charge being balanced by counter-ions, which reside in part in the inter-layer spacing of the clay. The thickness of the layers (platelets) is of the order of 1 nanometer and aspect ratios are high, typically 100-1500. The clay platelets are truly nanoparticulate. These nanoclays are combined together to form nanocomposites yielding desired properties. It is important to note that the molecular weight of the platelets is considerably greater than that of typical polymers. In addition, platelets are not totally rigid, but also have a degree of flexibility to them.

In an embodiment of the present invention, these clay materials are incorporated with particle filled polymers with silicate or clay sheets in which at least one dimension of the dispersed particles are in nanometer range. These heterogeneous nanoclays increase barrier properties of a material by creating an intricate framework that retards the passage of gas molecules through the nanocomposite matrix thereby allowing for improved sensory and shelf stability, for example, to coated food products for consumption by consumers.

One important feature of the present invention is the charges the nanoclays carry, which makes them highly hydrophilic and therefore compatible with a wide range of polymer types. For example, montmorillonite is the most common type of clay used for nanocomposite formation. However, other types of clays include hectorites such as magnesiosilicates, which contain very small platelets, and synthetic clays such as hydrotalcite, which can be produced in a very pure form and can carry a positive charge on the platelets in contrast to the negative charges found in montmorillonites.

Further, nanocomposites can be made via the synthetic route depending on whether the final material is required in a form of an intercalated or exfoliated hybrid. In the case of an intercalate, the organic component is inserted between the layers of clay such that the interlayer spacing is expanded, but the layers still bear a well-defined spatial relationship to each other. In an exfoliated structure, the layers of clay have been completely separated and the individual layers are distributed throughout the organic matrix. A third alternative is dispersion of complete clay particles (tactoids) within a polymer matrix. Polymers can be incorporated either as the polymeric species itself or via the monomer, which is polymerized in situ to yield a polymer-clay nanocomposite.

Surprisingly, it has been found that nanomaterials such as nanoclays or nanocomposites may be mixed with food ingredients to create an improved coating material, encapsulant or shell and applied to food compositions, including but not limiting to, chewing gums, confections such as hard and chewy candies, nougats, chocolates, toffees, dragees, caramels, suspensions, lozenges, compressed tablets, capsules, nuts, snack foods, baked goods and combinations thereof.

A variety of methods may be employed to add nanoclay materials to coatings of food products. For example, nanoclay material may be added directly to a coating material (e.g. syrup or solution).

In an embodiment of the present invention, nanomaterial can be used in the coating/panning of a chewing gum composition. Pellets or ball gums can be prepared as conventional chewing gum, but formed into pellets that are pillow shaped, or into balls. The pellets/balls can be then sugar coated or panned by conventional panning techniques to make a unique sugar coated pellet gum. The nanoclay employed can be easily added to a hot sugar solution prepared for sugar panning. The nanoclay can also be added as a powder blended with other powders often used in some types of conventional panning procedures.

Conventional panning procedures generally coat with sucrose, but recent advances in panning have allowed the use of other carbohydrate materials to be used in the place of sucrose. Some of these components include, but are not limited to, dextrose, maltose, palatinose, xylitol, lactitol, sorbitol, maltitol, mannitol, erythritol, hydrogenated isomaltulose and other new alditols or a combination thereof. These materials may be blended with panning modifiers including, but not limited to, gum arabic, maltodextrins, corn syrup, gelatin, cellulose type materials like carboxymethyl cellulose or hydroxymethyl cellulose, starch and modified starches, vegetable gums like alginates, locust bean gum, guar gum, and gum tragacanth, insoluble carbonates like calcium carbonate or magnesium carbonate and talc.

Antitack agents may also be added as panning modifiers which allow the use of a variety of carbohydrates and sugar alcohols to be used in the development of new panned or coated gum products. Flavors, cooling agents, acidulants and any other suitable ingredients may also be added to the coating material and with the nanoclay or nanocomposite material comprising, for example, montmorillonite, magnesiosilicate, hydrocalcite, alone or in any combination.

In an embodiment, the level of nanomaterial employed is preferably from 1% to 15.0% by weight of the coating. More preferably, the nanoclay material comprises from 2.5% to 10.0% by weight of the coating.

In an alternative embodiment, another type of pan coating would also aid in including nanoclays in confectionery ingredients. This technique is referred to as film coating and is more common in pharmaceuticals than in confectionaries, but the procedures are similar. For example, a film like shellac, zein, or cellulose-type material can be applied onto a pellet-type product forming a thin film on the surface of the product. The film can be applied by mixing the polymer, a plasticizer and a solvent (pigments are optional) and spraying the mixture onto the pellet surface. This is done in conventional type panning equipment or in more advanced side-vented coating pans. When a solvent like alcohol is used, extra precautions may be needed to prevent fires and explosions, and specialized equipment should be used.

Some film polymers can use water as the solvent in film coating. Recent advances in polymer research and in film coating technology eliminates the problem associated with the use of solvents in coating. These advances make it possible to apply aqueous films to a pellet or chewing gum product. Nanoclays can be added to this aqueous film solution and applied with the film to a confectionery or chewing gum product. The aqueous film or even the alcohol solvent film, in which the salt may be dispersed, may also contain a flavor along with the polymer and plasticizer. By adding the nanoclay to the polymer/plasticizer/solvent system, either as an emulsion or solution, the clay can be added with sweeteners, or flavors to balance taste. The nanoclay material can also be dissolved in the aqueous solvent and coated on the surface with the aqueous film. In an embodiment, the level of nanoclay or nanocomposite material employed can be preferably from 1% to 15.0% by weight of the coating, or more preferably from 2.5% to 10.0% by weight of the coating.

In another embodiment, nanoclay materials may be combined with polymers to create nanocomposites. Different processes maybe employed, including but are not limiting to, spray drying, extrusion, spinning extrusion, concentric extrusion, spray chilling, spray cooling, fluid-bed coating, molecular inclusion, microencapsulation and coacervation. These encapsulation or coating techniques that give partial or full encapsulation or coating of the nanoclay employed can be used individually or in any combination in a single step process or multiple step process. In an embodiment, a nanoclay can be spray-dried with gum Arabic creating a nanocomposite that is then added to a maltitol syrup solution which is used to coat a chewing gum product giving the final product improved shell hardness, stability and perceived crunchiness by consumers. In yet another embodiment, incorporation of the nanoclay may also be obtained using multistep processes like spray drying the nanoclay and then fluid-bed coating of the resultant powder.

The encapsulation techniques for making nanocomposites here described are standard coating techniques and generally give varying degrees of coating, from partial to full coating, depending on the coating composition used in the process. Generally, compositions that have high organic solubility, good film-forming properties and low water solubility include acrylic polymers and copolymers, carboxyvinyl polymer, polyamides, polystyrene, polyvinyl acetate phthalate, polyvinylpyrrolidone, and waxes. Although all of these materials are possible for encapsulation of the nanoclays, only food-grade materials should be considered. Two standard food-grade coating materials that are good film formers but are not very water soluble are shellac and zein. Others which are more water soluble, but good film formers, are materials like agar, alginates, a wide range of cellulose derivatives like ethyl cellulose, methyl cellulose, polyvinyl acetate, polyvinyl alcohol (PVOH), sodium hydroxymethyl cellulose, and hydroxypropylmethyl cellulose, dextrin, gelatin, and modified starches. Other encapsulants like gum acacia or maltodextrin can also be employed to create nanocomposites using nanoclays. In an embodiment, the amount of nanoclay material employed can be from 1% to 15% by weight of the coating.

In an alternative embodiment, a method of making nanocomposite material can be agglomeration of the nanoclays with an agglomerating agent which partially coats the nanoclay. This method includes the step of mixing the clay and agglomerating agent with a small amount of water or solvent. The mixture is prepared in such a way as to have individual wet particles in contract with each other so that a partial coating can be applied. After the water or solvent is removed, the mixture is ground and used as a powdered, coated product.

Materials that can be used as the agglomerating agent are the same as those used in encapsulation procedures mentioned previously. Some of the better agglomerating agents are the organic polymers like acrylic polymers and copolymers, polyvinyl acetate, polyvinylpyrrolidone, waxes, shellac and zein. Other agglomerating agents include, but are not limited to, agar, alginates, a wide range of cellulose derivatives like ethyl cellulose, methyl cellulose, sodium hydroxymethyl cellulose, hydroxypropylmethyl cellulose, dextrin, gelatin, modified starches, and vegetable gums like guar gum, locust bean gum, and carrageenan. In an embodiment, the amount of nanoclay material employed can be from 1% to 15% by weight of the coating.

The nanoclay may be coated in a two-step process or multiple step process. The nanoclay may be encapsulated with any of the materials as described previously and then the encapsulated nanoclays can be agglomerated as described previously to obtain an encapsulated/agglomerated nanoclay product that could be used in an oral composition.

In another embodiment of this invention, the nanoclay may be absorbed onto another component which is porous and become entrapped in the matrix of the porous component. Common materials used for absorbing the nanoclay include, but are not limited to, silicas, silicates, pharmasorb clay, spongelike beads or microbeads, amorphous sugars like spray-dried dextrose, sucrose, alditols, amorphous carbonates and hydroxides, including aluminum and calcium lakes, vegetable gums and other spray dried materials.

Depending on the type of absorbent material and how it is prepared, the amount of nanoclay material that can be loaded onto the absorbent will vary. Generally, materials like polymers or spongelike beads or microbeads, amorphous sugars and alditols and amorphous carbonates and hydroxides may be used as absorbents. Other materials like silicas and pharmasorb clays may be able to absorb 50% to 150% of the weight of the absorbent.

In an embodiment, the general procedure for absorbing the nanoclay onto the absorbent can be as follows. An absorbent like fumed silica powder can be mixed in a powder blender and an aqueous solution of the slightly soluble nanoclay material can be sprayed onto the powder as mixing continues. Generally, water is the
solvent, but other solvents like alcohol could also be used if approved for use in food. As the powder mixes, the liquid is sprayed onto the powder. Spraying is stopped before the mix becomes damp. The still free-flowing powder is removed from the mixer, dried to remove the water or other solvent and then ground to a specific particle size.

After the nanoclay is absorbed onto an absorbent or fixed onto an absorbent, the nanoclay can be coated by encapsulation. Either full or partial encapsulation may be used, depending on the coating composition used in the process. Full encapsulation may be obtained by coating with a polymer as in spray drying, spray chilling, fluid-bed coating, coacervation or any other standard technique. A partial encapsulation or coating can be obtained by agglomeration of the fixative/nanoclay mixture using any of the materials discussed above.

Another form of encapsulation of nanoclay materials is by entrapment of an ingredient by fiber extrusion or fiber spinning into a polymer. Polymers that can be used for extrusion are PVAC, hydroxypropylcellulose, polyethylene and other types of plastic polymers. A process of encapsulation by fiber extrusion is disclosed in U.S. Pat. No. 4.978,537. The water insoluble polymer may be preblended with the nanoclay, prior to fiber extrusion, or may be added after the polymer is melted. As the extrudate is extruded, it results in small fibers that are cooled and ground. This type of encapsulation/entrapment generally gives a very long, sustained release of an active ingredient.

The four primary methods to obtain a nanocomposite from nanoclay materials can be: (1) encapsulation by spray drying, fluid-bed coating, spray chilling and coacervation to give full or partial encapsulation, (2) agglomeration to give partial encapsulation, (3) fixation or absorption which also gives partial encapsulation, and (4) entrapment into an extruded compound. The nanoclay or nanocomposite may be coated in a two-step process or multiple step process. The clay or composite materials may be coated with any of the ingredients as described herein to obtain a coated product yielding improved crunch, sensory properties and/or stability.

It should be appreciated that any suitable type, number and arrangement of process procedures or steps (i.e., mixing, heating, drying, cooling, addition of ingredients), process parameters (i.e., temperature, pressure, pH, process times) or the like can be utilized.

In an embodiment, a coated chewing gum composition comprises a nanoclay, a mixture of nanoclay materials, a nanocomposite material and combinations thereof.

In an alternative embodiment, the coated chewing gum composition comprises the nanoclay montmorillonite. In another embodiment, montmorillonite is added to a maltitol solution and is pan coated onto a chewy candy composition. In yet another embodiment, montmorillonite is added to a chocolate syrup and is film coated onto a confectionery center.

In an embodiment, nanocomposite material comprised of spray-dried gum Arabic and montmorillonite is added to a sugar solution and pan coated onto a chewing gum center.

In an embodiment of the present invention, the aspect ratio of the montmorillonite is 100-500, and more preferably, 150-200.

As noted above, the present invention can be used to create coated chewing gum. A variety of chewing gum formulations can be used to create the chewing gum center. In general, a chewing gum composition typically comprises a water-soluble bulk portion, a water-insoluble chewable gum base portion and typically water-insoluble flavoring agents. The water-soluble portion dissipates with a portion of the flavoring agent over a period of time during chewing. The gum base portion is retained in the mouth throughout the chew.

The insoluble gum base generally comprises elastomers, resins, fats and oils, softeners, and inorganic fillers. The gum base may or may not include wax. The insoluble gum base can constitute a 5 to 95 percent, by weight, of the chewing gum, more commonly, the gum base comprises 10 to 50 percent of the gum, and in some preferred embodiments, 20 to 35 percent, by weight, of the chewing gum.

In an embodiment, the chewing gum of the present invention contains 20 to 60 weight percent synthetic elastomer, 0 to 30 weight percent natural elastomer, 5 to 55 weight percent elastomer plasticizer, 4 to 35 weight percent filler, 5 to 35 weight percent softener, and optional minor amounts (about one percent or less) of miscellaneous ingredients such as colorants, antioxidants, etc.

Synthetic elastomers may include, but are not limited to, polyisobutylene with a GPC weight average molecular weight of 10,000 to 95,000, isobutylene-isoprene copolymer having styrene-butadiene ratios of 1:3 to 3:1, polyvinyl acetate having a GPC weight average molecular weight of 2,000 to 90,000, polyisoprene, polyethylene, vinyl acetate-vinyl laurate copolymer having vinyl laurate content of 5 to 50 percent by weight of the copolymer, and combinations thereof.

Preferred ranges are, for polyisobutylene, 50,000 to 80,000 GPC weight average molecular weight, for styrene-butadiene, for polyvinyl acetate, 10,000 to 65,000 GPC weight average molecular weight with the higher molecular weight polyvinyl acetates typically used in bubble gum base, and for vinyl acetate-vinyl laurate, vinyl laurate content of 10-45 percent.

Natural elastomers may include natural rubber such as smoked or liquid latex and guayule as well as natural gums such as jelutong, lechi caspi, perillo, sorva, massaranduba balata, massaranduba chocolate, nispero, rosindinha, chicle, gutta hang kang, and combinations thereof. The preferred synthetic elastomer and natural elastomer concentrations vary depending on whether the chewing gum in which the base is used is adhesive or conventional, bubble gum or regular gum, as discussed below. Preferred natural elastomers include jelutong, chicle, sorva and massaranduba balata.

Elastomer plasticizers may include, but are not limited to, natural rosin esters, often called estergums, such as glycerol esters of partially hydrogenated rosin, glycerol esters polymerized rosin, glycerol esters of partially dimerized rosin, glycerol esters of rosin, pentaerythritol esters of partially hydrogenated rosin, methyl and partially hydrogenated methyl esters of rosin, pentaerythritol esters of rosin; synthetics such as terpene resins derived from alpha-pinene, beta-pinene, and/or d-limonene; and any suitable combinations of the foregoing the preferred elastomer plasticizers will also vary depending on the specific application, and on the type of elastomer which is used.

Fillers/texturizers may include magnesium and calcium carbonate, ground limestone, silicate types such as magnesium and aluminum silicate, clay, alumina, talc, titanium oxide, mono-, di- and tri-calcium phosphate, cellulose polymers, such as wood, and combinations thereof.

Softeners/emulsifiers may include tallow, hydrogenated tallow, hydrogenated and partially hydrogenated vegetable oils, cocoa butter, glycerol monostearate, glycerol triacetate, lecithin, mono-, di- and triglycerides, acetylated monoglycerides, fatty acids (e.g. stearic, palmitic, oleic and linoleic acids), and combinations thereof.

Colorants and whiteners may include FD&C-type dyes and lakes, fruit and vegetable extracts, titanium dioxide, and combinations thereof.

The base may or may not include wax. An example of a wax-free gum base is disclosed in U.S. Pat. No. 5,286,500.

In addition to a water insoluble gum base portion, a typical chewing gum composition includes a water soluble bulk portion and one or more flavoring agents. The water soluble portion can include bulk sweeteners, high intensity sweeteners, flavoring agents, softeners, emulsifiers, colors, acidulants, fillers, antioxidants, preservatives and other components or processing aids or combinations thereof that provide desired attributes.

Softeners are added to the chewing gum in order to optimize the chewability and mouth feel of the gum. The softeners, which are also known as plasticizers and plasticizing agents, generally constitute between 0.5 to 15% by weight of the chewing gum. The softeners may, in addition to including caprenin, include glycerin, lecithin, and combinations thereof. Aqueous sweetener solutions such as those containing sorbitol, hydrogenated starch hydrolysates, corn syrup, other polyols or sugars, such as tagatose, and combinations thereof, may also be used as softeners and binding agents in chewing gum.

Bulk sweeteners include both sugar and sugarless components. Bulk sweeteners typically constitute 5 to 95% by weight of the chewing gum, more typically, 20 to 80% by weight, and more commonly, 30 to 60% by weight of the gum.

Sugar sweeteners generally include saccharide-containing components commonly known in the chewing gum art, including, but not limited to, sucrose, dextrose, maltose, dextrin, dried invert sugar, fructose, levulose, tagatose, galactose, corn syrup solids, and the like, alone or in combination.

Sugarless sweeteners can include, but are not limited to, sugar alcohols such as mannitol, maltitol, xylitol, hydrogenated starch hydrolysates, sorbitol, lactitol, and the like, alone or in combination.

High intensity artificial or natural sweeteners can also be used in combination with the above. Preferred sweeteners include, but are not limited to sucralose, aspartame, salts of acesulfame, alitame, saccharin and its salts, cyclamic acid and its salts, stevioside, glycyrrhizin, dihydrochalcones, thaumatin, monellin, and the like, alone or in combination. In order to provide longer lasting sweetness and flavor perception, it may be desirable to encapsulate or otherwise control the release of at least a portion of the artificial sweetener. Such techniques as wet granulation, wax granulation, spray drying, spray chilling, fluid bed coating, coacervation, and fiber extension may be used to achieve the desired release characteristics.

Usage level of the artificial sweetener will vary greatly and will depend on such factors as potency of the sweetener, rate of release, desired sweetness of the product, level and type of flavor used and cost considerations. Thus, the active level of artificial sweetener may vary from 0.02 to 8%. When carriers used for encapsulation are included, the usage level of the encapsulated sweetener will be proportionately higher.

Combinations of sugar and/or sugarless sweeteners may be used in chewing gum. Additionally, the softener may also provide additional sweetness such as with aqueous sugar or alditol solutions.

If a low calorie gum is desired, a low caloric bulking agent can be used. Example of low caloric bulking agents include: polydextrose; Raftilose; Raftilin; Fructooligosaccharides (NutraFlora); Palatinose oligosaccharide; Guar Gum Hydrolysate (Sun Fiber); or indigestible dextrin (Fibersol). However, other low calorie bulking agents can be used.

A variety of flavoring agents can be used. The flavor can be used in amounts of 0.1 to 15 weight percent of the gum, and preferably, 0.2 to 5%. Flavoring agents may include essential oils, synthetic flavors or mixtures thereof including, but not limited to, oils derived from plants and fruits such as citrus oils, fruit essences, peppermint oil, spearmint oil, other mint oils, clove oil, oil of wintergreen, anise and the like. Artificial flavoring agents and components may also be used. Natural and artificial flavoring agents may be combined in any sensorially acceptable fashion.

A variety of processes for manufacturing chewing gum center are possible as is known in the art.

Chewing gum is generally manufactured by sequentially adding the various chewing gum ingredients to commercially available mixers known in the art. After the ingredients have been thoroughly mixed, the chewing gum mass is discharged from the mixer and shaped into the desired form, such as by rolling into sheets and cutting into sticks, extruding into chunks, or casting into pellets.

Generally, the ingredients are mixed by first melting the gum base and adding it to the running mixer. The gum base may alternatively be melted in the mixer.: Color and emulsifiers can be added at this time, along with syrup and a portion of the bulking agent. Further portions of the bulking agent may then be added to the mixer. A flavoring agent is typically added with the final portion of the bulking agent. The entire mixing procedure typically takes from five to fifteen minutes, but longer mixing times may sometimes be required. Those skilled in the art will recognize that many variations of the above described procedures may be followed.

Once formed, the chewing gum center can be coated. In conventional panning, the coating is initially present as a liquid syrup which contains from 30% to 80% or 85% of the coating ingredients previously described herein, and from 15% or 20% to 70% of a solvent such as water. In general, the coating process is carried out in conventional panning equipment. Sugarless gum center tablets to be coated are placed into the panning equipment to form a moving mass.

In the conventional panning process, the material or syrup which will eventually form the coating can be applied or distributed over the gum center tablets. Flavors may be added before, during and after applying the syrup to the gum centers. Once the coating has dried to form a hard surface, additional syrup additions can be made to produce a plurality of coatings or multiple layers of coating.

In the conventional panning procedure, syrup can be added to the gum center tablets at a temperature of from 37.8°C to 115.6°C (100°F. to 240°F). Preferably, the syrup temperature is from 60°C to 93.3°C (140°F. to 200°F). Most preferably, the syrup temperature should be kept constant throughout the process in order to prevent the polyol in the syrup from crystallizing. The syrup may be mixed with, sprayed upon, poured over, or added to the gum center tablets in any way known to those skilled in the art.

In some instances, a soft coating can be formed by adding a powder coating after a liquid coating. The powder coating may include natural carbohydrate gum hydrolysates, maltodextrin, gelatin, cellulose derivatives, starches, modified starches, sugars, sugar alcohols, natural carbohydrate gums and fillers like talc and calcium carbonate.

Each component of the coating on the gum center may be applied in a single layer or in a plurality of layers. In general, a plurality of layers can be obtained by applying single coats, allowing the layers to dry, and then repeating the process. The amount of solids added by each coating step depends chiefly on the concentration of the coating syrup. Any number of coats may be applied to the gum center tablet. Preferably, no more than 75 coats are applied to the gum center. More preferably, less than 60 coats are applied and most preferably, 30 to 60 coats are applied. In any event, the present invention contemplates applying an amount of molten polyol and syrup sufficient to yield a coated chewing gum product containing 10% to 65% coating. Preferably, the final product will contain at least 30% coating.

Those skilled in the art will recognize that in order to obtain a plurality of coated layers, a plurality of pnemeasured aliquots of coating syrup may be applied to the gum center. It is contemplated, however, that the volume of aliquots of syrup applied to the gum center may vary throughout the coating procedure.

In the conventional coating process, once a coating of syrup is applied to the gum center, drying can be done on the wet syrup in an inert medium. A preferred drying medium comprises air. Preferably, forced drying air contacts the wet syrup coating in a temperature range of from 21.1°C to 43.3°C (70° F. to 110° F). More preferably, the drying air is in the temperature range of from 26.7°C to 37.8°C (80° F. to 100° F). The invention also contemplates that the drying air possess a relative humidity of less than 15 percent. Preferably, the relative humidity of the drying air used between syrup applications is less than 8 percent.

The drying air may be passed over and admixed with the syrup coated gum centers in any way commonly known in the art. Preferably, the drying air is blown over and around the syrup coated gum centers at a flow rate, for large scale operations, of about 79.3 m³ per minute (2800 cubic feet per minute). If lower quantities of material are being processed, or if smaller equipment is used, lower flow rates would be used. If a flavor is applied after a syrup coating has been dried, the present invention contemplates drying the flavor with or without the use of a drying medium.

In alternative embodiments, the confectionery centers for this invention may be hard candies, chewy candies, coated chewy center candies, tabletted candies, suspensions, chocolates, toffees, dragees, caramels, lozenges, compressed tablets, capsules, nuts, snack foods, baked goods and syrups. By way of example, the hard candy can be primarily comprised of corn syrup and sugar, and derives its name from the fact that it contains only 1.0% and 4% moisture. In appearance, these types of candies are solid, but they are actually supercooled liquids, which are far below their melting points. There are different types of hard candies - glass types are usually clear or made opaque with dyes; and grained types, which are always opaque.

The continuous making process of the deposited glass types, with a sugar base can be as follows. Sugar corn syrup mixture is spread over a cylinder heated by high pressure steam. Rapid head exchange causes the water in the syrup to evaporate. The cooked syrup is discharged, colors and flavors are added. These can be conveyed directly to hoppers which then discharge directly into molds.

The candy is conveyed to batch rollers, which shapes and sizes the batch. The candy enters a forme, which shapes the individual pieces into discs, balls, barrels, etc. The present invention can be made into any shape, circles, squares, triangles etc, also into animal shapes or any other novelty molding available. The candy is then cooled, wrapped and packaged.

For grained types of candy, water and sugar are the basic components being mixed with other ingredients, and cooked at high temperatures (143.3°C, 154.4°C) (290 °F 310 °F), causing the water to turn to steam. The product is transferred to a cooling wheel, where it is collected in abou 68 kg (150 pound) batches, placed in a pulling machine to aerate the product, and the flavor is added. The candy is transferred to batch rollers where it is shaped and sized. The candy then enters a former, which shapes the individual pieces. The candy is cooled at a relative humidity of 35% and enters a rotating drum where it is coated with a fine sugar. The candy is then conveyed to the graining room for four hours at 32.2°C (90 °F) and 60% humidity. The entrapped air and moisture causes the product to grain.

Another general type of candy that has a soft consistency is nougat. Although nougat is perhaps the most complex compound of general confection bases not having a single composition, various proposals for use have been made. Basically, nougat is a fat containing a syrup that has been stabilized by the addition of a whipping agent, and was then mixed with air and boiled at high temperatures. Depending on the crystalline structure, the texture of nougat ranges from a long lasting chewable texture, a texture that is brittle to bite, to a granulated texture. Fats have been traditionally used in soft confections such as nougat to modify texture and eating characteristics and specifically, to make the nougat structure smooth, improve viscosity and, in addition, facilitate secondary confection making processes such as the cutting process or manufacturing process. Further, fats can work well as carriers for flavoring agents. Nougat traditionally has a high fat content and hence cannot be readily combined with chewing gum in confectionery compositions wherein such fat would adversely affect the gum base during chewing.

Compressed tablet confections may also be employed in embodiments of the present invention. In general, compressed tablets contain particulate materials and are formed into structures under pressure. These confections generally contain sugars in amounts up to 95%, by weight of the composition, and typical tablet excipients such as binders and lubricants as well as flavoring agents, coloring agents and the like.

Embodiments of the present invention can be of a variety of shapes, flavors and sizcs. Embodiments of the present invention may contain sugar or may be sugarless.

### EXAMPLES

By way of example and not limitation, the following examples are illustrative of various embodiments of the present invention and further illustrate experimental testing conducted with the confectionery compositions in accordance with embodiments of the present invention.

Instron model 5543 was used to determine the hardness of coated chewing gum products containing nanoclay material. Three coating syrups were made and were coated onto a standard chewing gum composition.

The chewing gum center formula is as follows:

| **Ingredient** | **% Wt.** |
|---|---|
| Base | 29.50 |
| Polyalcohol | 47.50 |
| Calcium Carbonate | 15.00 |
| Glycerin | 4.00 |
| Flavor | 2.00 |
| Artificial Sweetener | 0.60 |
| Cooling Agent | 0.10 |
| Water | 1.00 |
| Menthol | 0.30 |
| TOTAL: | 100.00% |

The coating syrup formulas are as follow:

| **Ingredient** | **Ex. 1** | **Ex. 2** | **Ex. 3** |
|---|---|---|---|
| Maltitol | 88.50 | 87.50 | 88.50 |
| Gum Acacia | 8.00 | 8.00 | -- |
| Color | 1.00 | 1.00 | 1.00 |
| Menthol | 1.00 | 1.00 | 1.00 |
| Flavor | 0.50 | 0.50 | 0.50 |
| Artificial Sweetener | 0.50 | 0.50 | 0.50 |
| Cooling Agent | 0.20 | 0.20 | 0.20 |
| Calcium Carbonate | 0.20 | 0.20 | 0.20 |
| Wax | 0.10 | 0.10 | 0.10 |
| Montmorillonite Nanoclay (PGB-PV-112304.1)* | -- | 1.0 | -- |
| Nanocomposite (spray-dried 85% gum acacia + 15% montmorillonite nanoclay PGB-PV-112304.1*) | -- | -- | 8.00 |
| TOTAL: | 100.00% | 100.00% | 100.00% |

*Montmorillonite nanoclay material #PGB-PV-112304.1 was purchased from Nanocor located in Arlington Heights, Illinois, USA.

Each of the solutions (Examples 1-3) were coated onto the chewing gum center using conventional pan coating procedures known in the art. The final composition for each composition consisted of 65% chewing gum and 35% coating. The samples were tempered for 24 hours in a cool, dry place.

After the 24 hour period, the chewing gum compositions were tested for their coating hardness. Instron results are as follow:

| **N** | **Ex. 1** | **Ex. 2** | **Ex. 3** |
|---|---|---|---|
| 1 | 0.65915 | 0.92465 | 1.34855 |
| 2 | 0.95530 | 1.14980 | 1.33919 |
| 3 | 0.69009 | 0.97626 | 1.04726 |
| 4 | 0.73200 | 0.91578 | 1.33038 |
| 5 | 0.66943 | 0.93782 | 1.25961 |
| | | | |
| Mean | 0.74190 | 0.96094 | 1.2650 |
| Standard Deviation | 0.1229 | 0.1080 | 0.1269 |

Overall, results show that nanoclay incorporation to the coating composition increases the hardness of the coating by 22.79%. Still further, nanocomposite incorporation to the coating increases the hardness of the coating by 41.42%.

The steps in making the coating solutions for the above test samples are as follow:
1) Add maltitol and water first
2) Bring up to temp (60-80°C)
3) Add the nanoclay to water and blended to exfoliate the platelets
4) Add the gum acacia to nanoclay dispersion and mix it
5) Add sweeteners
6) Check brix (70 or less)

By way of example and not limitation, the following examples illustrate various embodiments of the coating formulations of the present invention.

### Coating Solution Examples % Wt.

| **Ingredient** | **Ex. 4** | **Ex. 5** | **Ex. 6** | **Ex. 7** | **Ex. 8** | **Ex. 9** |
|---|---|---|---|---|---|---|
| Maltitol | | | 70.9 | | | 25.15 |
| Isomalt | 89.4 | | | | 75.00 | |
| Xylitol | | | | 97.94 | | |
| Erythritol | | | | | 10.00 | 25.00 |
| Sugar | | 80.0 | | | | 22.00 |
| Dextrose | | | | | 2.00 | |
| Gum Acacia | 5.00 | | | 1.00 | | |
| Gelatin | | | 10.00 | | | |
| Starch | | | | | 2.00 | |
| Modified Starch | | 6.00 | | | 3.00 | 18.00 |
| Color | | | 1.00 | 0.05 | 0.85 | |
| Titanium Dioxide | 1.00 | 1.00 | | | | |
| Wax | | 0.02 | 0.15 | | 0.30 | |
| Flavor | 0.50 | 1.00 | 0.85 | | | |
| Acid | | | | | 0.55 | 0.85 |
| Artificial Sweetener | 0.75 | | 0.55 | 0.08 | | 1.00 |
| Menthol | 0.30 | | | 0.88 | 0.05 | |
| Cooling Agent | 0.05 | | 0.55 | | 0.15 | |
| Montmorillonite Nanoclay | 3.0 | 11.98 | 16.00 | 0.05 | 6.10 | 8.00 |
| | | | | | | |
| TOTAL: | 100.00% | 100.00% | 100.00% | 100.00% | 100.00% | 100.00% |

Example 10: The coating solution of Example 4 is pan coated onto a sugar free chewing gum composition.

Example 11: The coating solution of Example 5 is fluid bed coated onto a miniature hard candy composition.

Example 12: The coating solution of Example 6 is concentrically coextruded with a flavor oil to encapsulate the flavor oil, and added to a chewy candy composition giving a crunchy texture while releasing the flavor during mastication for a unique oral sensation.

Example 13: The coating solution of Example 7 is used for dip- coating dry fruits.

Example 14: The coating solution of Example 8 is used for coating a hard-boiled candy with a liquid center using pan coating techniques.

Example 15: The coating solution of Example 9 is used in coating pharmaceutical capsules containing active ingredient using film coating techniques.

Example 16: The coating solution of Example 5 is used to add an additional coating layer to Example 10.

Example 17: The coating solution of Example 4 is used to add an additional layer of coating to the encapsulated flavor oil of Example 12.

Example 18: The coating solution of Example 4 is used to coating the chewy candy center of Example 12.

Example 19: The coating solution of Example 8 is used to encapsulate a chocolate syrup.

Example 20: The coating solution of Example 6 is sprayed onto a compressed tablet for increased stability and unique sensoral properties.

Example 21: The coating solution of Example 7 is used to encapsulate a suspension containing a sweetener and a flavor.

### Coating Solution Examples (% Wt.)

| **Ingredient** | **Ex. 16** | **Ex. 17** | **Ex. 18** | **Ex. 19** | **Ex. 20** | **Ex. 21** |
|---|---|---|---|---|---|---|
| Maltitol | 85.00 | | | | 75.00 | 95.00 |
| Sorbitol | 5.00 | | 10.00 | | | |
| Xylitol | | | 58.00 | | 2.00 | |
| Sugar | | 95.00 | | 80.00 | | |
| Corn Syrup Solids | | | 8.00 | 2.50 | | 0.05 |
| Gum Acacia | 3.00 | | 0.50 | | 8.00 | 1.00 |
| Sodium Alginate | | | 0.85 | | | 1.00 |
| Hydroxypropyl Cellulose | | 2.00 | | 8.50 | | |
| Flavor | 1.00 | 0.20 | | 0.75 | | 1.25 |
| Color | 0.05 | 0.05 | 1.00 | 0.25 | 0.85 | 0.03 |
| Natural Sweetener | 0.05 | | 3.00 | | | |
| Artificial Sweetener | 0.02 | | 0.65 | | 0.75 | 0.85 |
| Acid | | 1.00 | | 0.25 | | |
| Talc | 2.00 | | | | | 0.25 |
| Wax | | 0.05 | 0.25 | | 0.75 | |
| Spray Dried Montmorillonite Nanoclay (25% carrageenan + 67% gum acacia +8% montmorillonite nancolay) | | 1.70 | | | 12.65 | |
| Spray Dried Montmorillonite Nanoclay (98% modified starch +2% montmorillonite nancolay) | | | 17.75 | | | |
| Spray Dried Montmorillonite Nanoclay (85% gum acacia + 15% montmorillonite nanoclay) | 3.88 | | | 7.75 | | 0.57 |
| | | | | | | |
| TOTAL: | 100.00% | 100.00% | 100.00% | 100.00% | 100.00% | 100.00% |

It should be understood that various changes and modifications to the presently preferred embodiments described herein will be apparent to those skilled in the art. Such changes and modifications can be made without departing from the scope of the present invention as defined by the appended claims.

## Claims

1. A confectionery composition comprising confectionery center and a coating surrounding the confectionery center, charecterised in that the coating has a nanomaterial selected from the group consisting of a nanoclay, a mixture of nanoclay materials, a nanocomposite material and combinations thereof.

2. The composition of Claim 1, wherein the confectionery center is selected from the group consisting of chewing gums, hard candies, chewy candies, nougats, chocolates, toffees, dragees, caramels, suspensions, lozenges, compressed tablets, capsules, nuts, snack foods, baked goods and combinations thereof.

3. The composition of Claim 2, wherein the nanoclay is selected from the group consisting of montmorillonite, magnesiosilicate, hydrocalcite and combinations theteof.

4. The composition of Claim 3, wherein the nanoclay montmorillonite has an aspect ratio of 100-500.

5. The composition of Claim 1, wherein the coating further comprises an ingredient selected from. the group consisting sucrose, dextrose, maltose, palatinose, xylitol, lactitol, sorbitol, maltitol, mannitol, erythritol, hydrogenated isomaltulose, alditols, gum arabic, maltodextrin, corn syrup, gelatin, chocolate, cellulose material, carboxymethyl Cellulose, hydroxymethyl cellulose, polyvinyl acetate, polyvinyl alcohol, dextrin, starch, modified starch, vegetable gum, Alginate, locust bean gum, guar gum, gum tragacanth, shellac, zein, insoluble carbonates, calcium carbonates, magnesium carbonate, talc, antitack agents, flavors, cooling agents, acidulants and combinations thereof.

6. The composition of Claim 1, wherein the level of the nanomaterial comprises from 1 % to 15.0% by weight of the coating.

7. The composition of Claim 1, wherein the nanocomposite material comprises spray-dried gum arabic and montmorillonite.

8. The composition of Claim 1, wherein the nanocomposite material is formed by a process selected from the group consisting of encapsulation, agglomeration, fixation, absorption, extrusion, spinning extrusion, concentric extrusion, entrapment into an extruded compound and combination thereof.

9. The composition of Claim 8, wherein the encapsulation is achieved by a process selected from the group consisting of spray drying, fluid-bed coating, spray chilling, spray cooling, molecular inclusion, microencapsulation, coacervation and combinations thereof.

10. A method for manufacturing a coated confectionery composition, the method comprising:
providing a coating material;
providing a confectionery composition; and
applying at least one layer of the coating material to the confectionery composition
**characterised in that** the coating material comprises a nanomaterial selected from the group consisting of a nanoclay, a mixture of nanoclay materials, a nanocomposite material combinations thereof.

11. The method of Claim 10, wherein the confectionery composition is selected from the group consistiug of chewing gums, hard candies, chewy candies, nougats, chocolates, toffees, dragees, caramels, suspensions, lozenges, compressed tablets, capsules, nuts, snack foods, baked goods and combinations thereof.

12. The method of Claim 10, wherein the coating material is applied by a process selected from the group consisting of pan coating, spraying, film coating and combinations thereof.

13. The method of Claim 10, wherein the nanoclay comprises montmorillonite, magnesiosilicate, hydrocalcite and combinations thereof.

14. The method of Claim 10, wherein the coating material comprises montmorillonite and a maltitol solution and wherein the coating material is applied by pan coating onto the confectionery composition.

15. The method of Claim 10, wherein the coating material comprises montmorillonite and a chocolate syrup and wherein the coating material is applied by film coating onto the confectionery composition.

16. The method of Claim 10, wherein the coating material comprises a sugar solution and the nanocomposite material, wherein the nanocomposite material comprises a spray-dried gum arabic and montmorillonite and wherein the coating material is applied by pan coating onto the confectionery composition.

## Patentansprüche

1. Süßwarenzusammensetzung, welche ein Süßwarenzentrum und eine das Süßwarenzentrum umgebende Beschichtung umfasst, **dadurch gekennzeichnet, dass** die Beschichtung ein Nanomaterial aufweist, welches ausgewählt ist aus der Gruppe bestehend aus einem Nanoton, einer Mischung von Nanotonmaterialen, einem Nanokompositmaterial und Kombinationen davon.

2. Zusammensetzung nach Anspruch 1, wobei das Süßwarenzentrum ausgewählt ist aus der Gruppe bestehend aus Kaugummis, Lutschbonbons, Kaubonbons, Nougat, Schokoladen, Toffees, Dragees, Karamelbonbons, Suspensionen, Lutschtabletten, gepressten Tabletten, Kapseln, Nüssen, Knabberartikeln (snack foods), Backwaren und Kombinationen davon.

3. Zusammensetzung nach Anspruch 2, wobei der Nanoton ausgewählt ist aus der Gruppe bestehend aus Montmorillonit, Magnesiumsilikat, Hydrocalcit und Kombinationen davon.

4. Zusammensetzung nach Anspruch 3, wobei der Nanoton Montmorillonit in einem Seitenverhältnis von 100-500 aufweist.

5. Zusammensetzung nach Anspruch 1, wobei die Beschichtung weiterhin einen Bestandteil umfasst ausgewählt aus der Gruppe bestehend aus Sucrose, Dextrose, Maltose, Palatinose, Xylitol, Lactitol, Sorbitol, Maltitol, Mannitol, Erythritol, hydrierte Isomaltulose, Alditole, Gummi arabicum, Maltodextrin, Maissirup, Gelatine, Schokolade, Zellulosematerial, Carboxymethylcellulose, Hydroxymethylcellulose, Polyvinylacetat, Polyvinylalkohol, Dextrin, Stärke, modifizierte Stärke, pflanzliche Verdickungsmittel, Alginat, Johannesbrotkernmehl, Guarkernmehl, Tragant, Schellack, Zein, unlösliche Carbonate, Kalziumcarbonat, Magnesiumcarbonat, Talk, Trennmittel (antitack agents), Aromen, Kühlmittel, Säuerungsmittel und Kombinationen davon.

6. Zusammensetzung nach Anspruch 1, wobei der Level von dem Nanomaterial von 1 Gew.-% bis 15 Gew.-% von der Beschichtung umfasst.

7. Zusammensetzung nach Anspruch 1, wobei das Nanokompositmaterial sprühgetrocknetes Gummi arabicum und Montmorillonit umfasst.

8. Zusammensetzung nach Anspruch 1, wobei das Nanokompositmaterial durch ein Verfahren gebildet wird, ausgewählt aus der Gruppe bestehend aus Verkapselung, Agglomeration, Fixierung, Absorption, Extrusion, Spinnextrusion (spinning extrusion), konzentrische Extrusion, Einschluss in eine extrudierte Verbindung und Kombinationen davon.

9. Zusammensetzung nach Anspruch 18, wobei die Verkapselung durch ein Verfahren erzielt wird, ausgewählt aus der Gruppe bestehend aus Sprühtrocknen, Wirbelbettbeschichten, Sprühabschrecken (spray chilling), Sprühkühlen (spray cooling), molekulare Inklusion, Mikroverkapselung, Koazervation und Kombinationen davon.

10. Verfahren zur Herstellung einer beschichteten Süßwarenzusammensetzung, wobei das Verfahren umfasst:
Bereitstellen eines Beschichtungsmaterials,
Bereitstellen einer Süßwarenzusammensetzung; und
Aufbringen von mindestens einer Schicht des Beschichtungsmaterials auf die Süßwarenzusammensetzung
**dadurch gekennzeichnet, dass** das Beschichtungsmaterial ein Nanomaterial ausgewählt aus der Gruppe bestehend von einem Nanoton, einer Mischung von Nanotonmaterialien, einem Nanokompositmaterial und Kombinationen davon umfasst.

11. Verfahren nach Anspruch 10, wobei die Süßwarenzusammensetzung ausgewählt ist aus der Gruppe bestehend aus Kaugummis, Lutschbonbons, Kaubonbons, Nougat, Schokoladen, Toffees, Dragees, Karamelbonbons, Suspensionen, Lutschtabletten, gepressten Tabletten, Kapseln, Nüssen, Knabberartikein (snack foods), Backwaren und Kombinationen davon.

12. Verfahren nach Anspruch 10, wobei das Beschichtungsmaterial durch ein Verfahren aufgebracht wird, ausgewählt aus der Gruppe bestehend aus Dragieren, Sprühen, Filmbeschichten und Kombinationen davon.

13. Verfahren nach Anspruch 10, wobei der Nanoton Montmorillonit, Magnesiumsilikat, Hydrocalcit und Kombinationen davon umfasst.

14. Verfahren nach Anspruch 10, wobei das Beschichtungsmaterial Montmorillonit und eine Maltitollösung umfasst und wobei das Beschichtungsmaterial durch Dragieren auf die Süßwarenzusammensetzung aufgebracht wird.

15. Verfahren nach Anspruch 10, wobei das Beschichtungsmaterial Montmorillonit und einem Schokoladensirup umfasst und wobei das Beschichtungsmaterial durch Filmbeschichten auf die Süßwarenzusammensetzung aufgebracht wird.

16. Verfahren nach Anspruch 10, wobei das Beschichtungsmaterial eine Zuckerlösung und das Nanokompositmaterial umfasst, wobei das Nanokompositmaterial ein sprühgetrocknetes Gummi arabicum und Montmorillonit umfasst und wobei das Beschichtungsmaterial durch Dragieren auf die Süßwarenzusammensetzung aufgebracht wird.

## Revendications

1. Composition de confiserie comprenant un coeur de confiserie et un enrobage entourant le coeur de confiserie, **caractérisée en ce que** l'enrobage comprend un nanomatériau choisi parmi le groupe constitué d'une nanoargile, d'un mélange de matériaux à base de nanoargile, d'un matériau nanocomposite et de combinaisons de ceux-ci.

2. Composition de la revendication 1, dans laquelle le coeur de confiserie est choisi parmi le groupe constitué de gommes à mâcher, de bonbons durs, de bonbons à mâcher, de nougats, de chocolats, de caramels anglais, de dragées, de caramels, de suspensions, de pastilles, de comprimés, de capsules, de noix, de grignotines, de produits de boulangerie et de combinaisons de ceux-ci.

3. Composition de la revendication 2, dans laquelle la nanoargile est choisie parmi le groupe constitué de montmorillonite, de magnésiosilicate, d'hydrocalcite et de combinaisons de ceux-ci.

4. Composition de la revendication 3, dans laquelle la nanoargile montmorillonite a un rapport d'aspect de 100-500.

5. Composition de la revendication 1, dans laquelle l'enrobage comprend en outre un ingrédient choisi parmi le groupe constitué de sucrose, dextrose, maltose, palatinose, xylitol, lactitol, sorbitol, maltitol, mannitol, érythritol, isomaltulose hydrogéné, alditols, gomme arabique, maltodextrine, sirop de maïs, gélatine, chocolat, matériau cellulosique, carboxyméthylcellulose, hydroxyméthylcellulose, acétate de polyvinyle, alcool polyvinylique, dextrine, amidon, amidon modifié, gomme végétale, alginate, gomme de caroube, gomme de guar, gomme adragante, gomme-laque, zéine, carbonates insolubles, carbonate de calcium, carbonate de magnésium, talc, agents anti-collants, arômes, agents de refroidissement, acidulants et de combinaisons de ceux-ci.

6. Composition de la revendication 1, dans laquelle le niveau du nanomatériau comprend de 1% à 15,0% en poids de l'enrobage.

7. Composition de la revendication 1, dans laquelle le matériau nanocomposite comprend de la gomme arabique et de la montmorillonite séchées par pulvérisation.

8. Composition de la revendication 1, dans laquelle le matériau nanocomposite est formé par un processus choisi parmi le groupe constitué de l'encapsulation, l'agglomération, la fixation, l'absorption, l'extrusion, l'extrusion par filage, l'extrusion concentrique, le piégeage dans un composé extrudé et de combinaisons de ceux-ci.

9. Composition de la revendication 8, dans laquelle l'encapsulation est réalisée par un processus choisi parmi le groupe constitué du séchage par pulvérisation, enrobage à lit fluidisé, réfrigération par pulvérisation, refroidissement par pulvérisation, inclusion moléculaire, microencapsulation, coacervation, et de combinaisons de ceux-ci.

10. Procédé de fabrication d'une composition de confiserie enrobée, le procédé comprenant le fait :
de fournir un matériau d'enrobage ;
de fournir une composition de confiserie ; et
d'appliquer au moins une couche du matériau d'enrobage à la composition de confiserie.
**caractérisé en ce que** le matériau d'enrobage comprend un nanomatériau choisi parmi le groupe constitué d'une nanoargile, d'un mélange de matériaux à base de nanoargile, d'un matériau nanocomposite et de combinaisons de ceux-ci.

11. Procédé de la revendication 10, dans lequel la composition de confiserie est choisie parmi le groupe constitué de gommes à mâcher, de bonbons durs, de bonbons à mâcher, de nougats, de chocolats, de caramels anglais, de dragées, de caramels, de suspensions, de pastilles, de comprimés, de capsules, de noix, de grignotines, de produits de boulangerie et de combinaisons de ceux-ci.

12. Procédé de la revendication 10, dans lequel le matériau d'enrobage est appliqué par un processus choisi parmi le groupe constitué d'enrobage en turbine, de pulvérisation, d'enrobage par film et de combinaisons de ceux-ci.

13. Procédé de la revendication 10, dans lequel la nanoargile comprend de la montmorillonite, du magnésiosilicate, de l'hydrocalcite, et des combinaisons de ceux-ci.

14. Procédé de la revendication 10, dans lequel le matériau d'enrobage comprend de la montmorillonite et une solution de maltitol et dans lequel le matériau d'enrobage est appliqué par enrobage en turbine sur la composition de confiserie.

15. Procédé de la revendication 10, dans lequel le matériau d'enrobage comprend de la montmorillonite et un sirop de chocolat et dans lequel le matériau d'enrobage est appliqué par enrobage par film sur la composition de confiserie.

16. Procédé de la revendication 10, dans lequel le matériau d'enrobage comprend une solution de sucre et le matériau nanocomposite, dans lequel le matériau nanocomposite comprend de la gomme arabique et de la montmorillonite séchées par pulvérisation et dans lequel le matériau d'enrobage est appliqué par enrobage en turbine sur la composition de confiserie.
